# EUROPEAN PATENT APPLICATION

(11) **EP 2 129 064 A2**
(43) Date of publication of application: **02.12.2009**
(21) Application number: 08173036.8
(22) Date of filing: 29.12.2008
(51) Int. Cl.: H04L 27/26, H04R 3/00

(54) **Wireless audio transmitting apparatus; speaker and system and controlling method thereof**

(30) Priority: 29.05.2008 KR 20080050252
(71) Applicant: Korea Electronics Technology Institute, Bundang-gu, Seongnam-si Gyeonggi-do 463-816 (KR)
(72) Inventor: Park, Kyung Won, Seongnam-si 208-501, Gyeonggi-do (KR); Seo, Jeong Wook, Hwaseong-si, 116-504 Gyeonggi-do (KR); Wee, Jung Wook, Gwangju-si 202-404 Gyeonggi-do (KR); Jeon, Won Gi, Suji-gu 706-803, Gyeonggi-do (KR); Paik, Jong Ho, Suji-gu, Yongin-si 511-1604 Gyeonggi-do (KR)
(74) Representative: Molnia, David

(57) **Abstract**

Provided are a wireless audio transmitting apparatus, speaker and system and a controlling method thereof. The wireless audio transmitting apparatus includes a receiver and a transmitting module. The receiver receives a plurality of characteristic data from a plurality of wireless audio speakers. The transmitting module allocates respective different subcarriers to the respective wireless audio speakers on the basis of the respective characteristic data and transmits respective audio data for the respective wireless audio speakers, on the respective subcarriers, in an OFDM modulation scheme, in a batch fashion.

## Description

### CROSS-REFERENCE TO RELATED APPLICATIONS

This application claims priority under 35 U.S.C. §119 to Korean Patent Application No. 10-2008-0050252, filed on 29 May, 2008, the disclosure of which is incorporated herein by reference in its entirety.

### TECHNICAL FIELD

The present disclosure relates to a wireless audio transmitting apparatus, speaker and system and a controlling method thereof, and in particular, to a wireless audio transmitting apparatus, speaker and system and a controlling method thereof, which divisively transmits multichannel audio signals in an Orthogonal Frequency Division Multiplexing (OFDM) scheme.

### BACKGROUND

Recently, audio reproducing media such as CD, DVD, DVB, DAB, DMB and IPTV are widely used, and each audio reproducing medium is connected to a plurality of speakers to reproduce a multichannel sound source, thereby providing a realistic reproduction service. The connection of speakers to an audio reproducing medium requires complex interconnections between the audio reproducing medium and the respective speakers. A speaker device capable of receiving/reproducing wireless audio signals has been proposed for convenience in installing such speakers.

A medium transmitting wireless audio signals is called a wireless audio distributor/transmitter, and a speaker device receiving wireless audio signals is called a wireless audio speaker.

A wireless audio distributor/transmitter performs a signal processing operation reflecting the system characteristics on a read audio sound source to generate multichannel audio data, and wirelessly transmits the generated multichannel audio data to each speaker device so that a wireless audio speaker reproduces the multichannel audio data for itself.

Examples of the wireless distribution/transmission schemes according to the related art include Time Division Multiplexing (TDM), Orthogonal Frequency Division Multiplexing (OFDM/TDM), and Frequency Division Multiplexing (FDM).

Firstly, a TDM-based wireless audio distributor/transmitter packetizes/multiplexes M multichannel audio data from an audio sound source to generate one stream, adds multiplex data to the generated stream, modulates the results, and transmits the results over a wireless channel during the total transmission time T.

Then, TDM-based wireless audio speakers demodulate wireless signals during the time T, extract audio data for themselves using the multiplex data, and output the audio data to speakers.

The TDM scheme shares a carrier for one frequency band in a time-division manner. Therefore, the TDM scheme transmits multichannel audio data in a temporally-continuous manner, which may cause an inter-channel interference. In order to prevent such an inter-channel interference, each wireless audio speaker needs to receive/equalize audio data of all the channels although outputting audio data of one channel. Therefore, each wireless audio speaker may have poor power consumption efficiency for effective data.

Secondly, an OFDM/TDM-based wireless audio distributor/transmitter allocates a transmission time of multichannel audio data for each wireless audio speaker of the OFDM scheme using a plurality of subcarriers, and each wireless audio speaker receives multichannel audio data only during the allocated transmission time, thus making it possible to eliminate an inter-channel interference.

However, the OFDM/TDM scheme provides only the temporal allocation of wireless channel resources to multichannel audio data. Therefore, when wireless channel frequency characteristics are different between the respective audio speakers, it is difficult to provide audio outputs of the same quality for all the audio speakers.

Thirdly, an FDM-based wireless audio distributor/transmitter modulates analog multi-channel audio signals by subcarriers for respective channels and transmits the results through a filter bank, and an FDM-based wireless audio speaker receives only a multichannel audio signal for its own frequency band by a Band Pass Filter (BPF) and outputs the multichannel audio signal to a speaker.

The FDM scheme provides frequency diversity effects, thus making it possible to improve the quality of a received signal and reduce the interference between wireless audio speakers. However, the FDM scheme is disadvantageous in that the complexity of a filter band used to limit the frequency band of a multichannel wireless audio signal is high and each audio channel can be allocated only one subcarrier.

Therefore, when wireless channel environments are different between wireless audio speakers, the FDM scheme cannot transmit data from the wireless audio speakers to the wireless audio distributor/transmitter, thus making it impossible to provide audio services of the same quality for all of the wireless audio speakers.

### SUMMARY

Accordingly, the present disclosure provides a wireless audio transmitting apparatus, speaker and system and a controlling method thereof, which makes it possible to install speakers and audio devices easily by using wireless audio speakers.

The present disclosure also provides a wireless audio transmitting apparatus, speaker and system and a controlling method thereof, which can prevent an inter-channel delay by simultaneously transmitting audio signals for one or more wireless audio speakers in an Orthogonal Frequency Division Multiple Access (OFDMA) scheme.

The present disclosure also provides a wireless audio transmitting apparatus, speaker and system and a controlling method thereof, which can use the resources for the respective wireless audio speakers adaptively by monitoring the wireless channel environments.

According to an aspect, there is provided a wireless audio transmitting apparatus including: a receiver receiving a plurality of characteristic data from a plurality of wireless audio speakers; and a transmitting module allocating respective different subcarriers to the respective wireless audio speakers on the basis of the respective characteristic data and transmitting respective audio data for the respective wireless audio speakers, on the respective subcarriers, in an OFDM modulation scheme, in a batch fashion.

According to another aspect, there is provided a wireless audio speaker including: a receiver OFDM-demodulating and decoding only audio data carried on an allocated subcarrier, among multichannel audio data transmitted from a wireless audio transmitting apparatus on a plurality of subcarriers in an OFDM scheme; a demultiplexer dividing the audio data into an audio stream and control data; a speaker reproducing the audio stream; and a controller controlling the operation state of the speaker according to the control data.

According to another aspect, there is provided a wireless audio transmitting system including: one or more wireless audio speakers; and a wireless audio transmitting apparatus receiving respective characteristic data from the respective wireless audio speakers, generating respective audio streams for the respective wireless audio speakers on the basis of the respective characteristic data, and transmitting the respective audio streams, on respective subcarriers allocated the respective wireless audio speakers, in an OFDM modulation scheme, in a batch fashion.

According to another aspect, there is provided a method for controlling a wireless audio transmitting system transmitting multichannel audio data to a plurality of wireless audio speakers, the method including: receiving respective characteristic data from the respective wireless audio speakers; allocating respective different subcarriers to the respective wireless audio speakers on the basis of the respective characteristic data and generating respective audio data for the respective wireless audio speakers; and transmitting multichannel audio data for the respective wireless audio speakers on the allocated respective subcarriers in a batch fashion.

According to another aspect, there is provided a wireless audio transmitting apparatus including: a receiver receiving a plurality of characteristic data from a plurality of wireless audio speakers; and a transmitting module establishing respective links for the respective wireless audio speakers on the basis of the respective characteristic data, generating respective audio data for the respective wireless audio speakers on the basis of a sound source and the respective characteristic data, synthesizing the respective audio data, and transmitting the synthesized audio data through the respective links.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

FIG. 1 is a block diagram of a wireless audio transmitting system according to an exemplary embodiment;

FIG. 2 is a block diagram of a wireless audio transmitting apparatus according to an exemplary embodiment;

FIG. 3 is a block diagram of a multichannel distributor of the wireless audio transmitting apparatus according to an exemplary embodiment;

FIG. 4 is a block diagram of a wireless audio speaker according to an exemplary embodiment; and

FIG. 5 is a flow diagram illustrating a method for controlling the wireless audio transmitting system according to an exemplary embodiment.

### DETAILED DESCRIPTION OF EMBODIMENTS

Hereinafter, specific embodiments will be described in detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art.

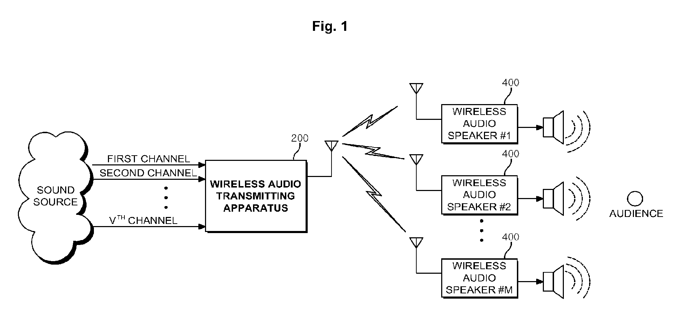

FIG. 1 is a block diagram of a wireless audio transmitting system according to an exemplary embodiment.

Referring to FIG. 1, a wireless audio transmitting system according to an exemplary embodiment includes a wireless audio transmitting apparatus 200 and one or more wireless audio speakers 400.

The wireless audio transmitting apparatus 200 performs an auto-initialization process and then requests the respective characteristic data to the respective wireless audio speakers 400 in a batch fashion.

Herein, the characteristic data may be at least one of an identifier of the wireless audio speaker 400 and a wireless channel condition between the wireless audio speaker 400 and the wireless audio transmitting apparatus 200.

The respective wireless audio speakers 400 transmit the respective characteristic data in response to the request of the wireless audio transmitting apparatus 200.

Then, the wireless audio transmitting apparatus 200 receives the respective characteristic data from the respective wireless audio speakers 400, performs a signal processing operation on a sound source in accordance with the respective characteristic data, and generates the respective audio streams for the respective wireless audio speakers 400.

Herein, the wireless audio transmitting apparatus 200 may discriminate each wireless audio speaker 400 transmitting each characteristic data, among the wireless audio speakers 400, on the basis of the identifier (unique number) contained in each characteristic data.

Also, the wireless audio transmitting apparatus 200 encodes and maps the respective audio streams to generate multichannel audio data, and transmits the multichannel audio data to the respective wireless audio speakers 400, on respectively allocated different subcarriers, in an OFDM modulation scheme, in a batch fashion.

Herein, the number of multiple channels (i.e., the number of channels of the wireless audio speakers, for example, 5.1 channels) may be determined on the basis of the respective characteristic data.

Herein, the wireless audio transmitting apparatus 200 may determine a subcarrier allocation method in consideration of an audio channel allocation time, a subcarrier location, a constellation, an error correction coding scheme, a coding rate, and an interleaving architecture.

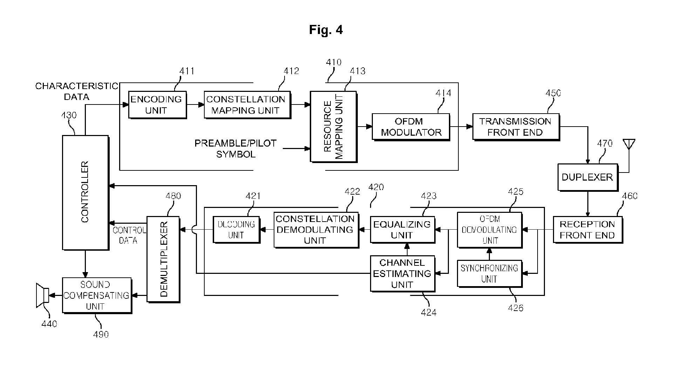

The wireless audio speaker 400 receives and reproduces only audio data carried on its own subcarrier, among the multichannel audio data carried on the respective subcarriers. A detailed structure of the wireless audio speaker 400 will be described later with reference to FIG. 4.

Meanwhile, the wireless audio transmitting apparatus 200 requests the respective characteristic data to the respective wireless audio speakers 400 periodically or on demand, detects the respective wireless channel conditions with the respective wireless audio speakers 400 on the basis of the respective characteristic data received from the respective wireless audio speakers 400, and allocates the respective subcarriers to the respective wireless audio speakers 400 on the basis of the detected respective wireless channel conditions, thereby making it possible to improve the audio service quality.

The wireless audio transmitting apparatus 200 includes a receiver 230 and a transmitting module 300. The receiver 230 receives the respective characteristic data from the respective wireless audio speakers 400. The transmitting module 300 establishes the respective links for the respective wireless audio speakers 400 on the basis of the respective characteristic data, generates the respective audio data for the respective wireless audio speakers 400 on the basis of the respective characteristic data and the sound source, synthesizes the respective audio data to generate multichannel audio data, and transmits the generated multichannel audio data through the established respective links.

Herein, the respective links may be connection channels between the respective wireless audio speakers 400 and the wireless audio transmitting apparatus 200 that are used to communicate the respective characteristic data and the multichannel audio data generated by the transmitting module 300.

Herein, it is preferable that the respective links are established after the communication of the respective characteristic data between the respective wireless audio speakers 400 and the wireless audio transmitting apparatus 200.

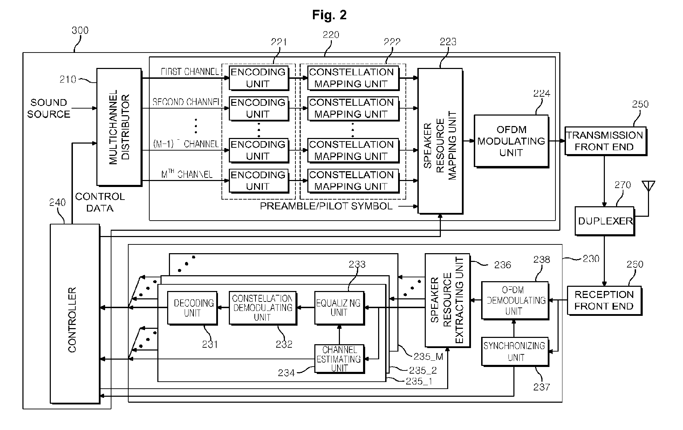

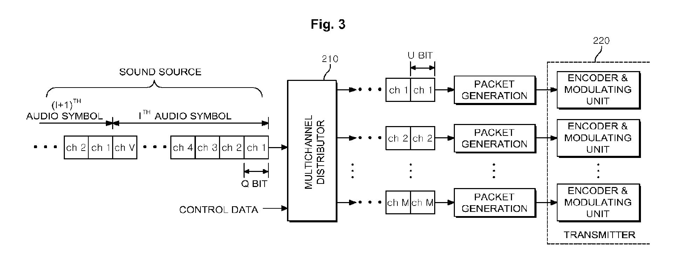

For example, the respective links may be established using different frequency bands. Hereinafter, the wireless audio transmitting apparatus 200 establishing the respective links by an OFDM scheme according to an exemplary embodiment will be described in detail with reference to FIGS. 2 and 3.

FIG. 2 is a block diagram of the wireless audio transmitting apparatus 200 according to an exemplary embodiment.

Referring to FIG. 2, the wireless audio transmitting apparatus 200 according to an exemplary embodiment includes a receiver 230 and a transmitting module 300. The transmitting module 300 includes a controller 240, a multichannel distributor 210, and a transmitter 220.

The receiver 230 receives the respective characteristic data from the respective wireless audio speakers 400 and transfers the respective characteristic data to the controller 240. The receiver 230 includes an OFDM demodulating unit 238, a synchronizing unit 237, a speaker resource extracting unit 236, and a plurality of demodulating units 235_1 ∼ 235_M.

The OFDM demodulating unit 238 OFDM-demodulates signals, received form the respective wireless audio speakers 400, to extract the respective characteristic data, and classifies the extracted respective characteristic data into the respective characteristic data for the respective wireless audio speakers 400.

The synchronizing unit 237 detects the synchronization of the respective characteristic data in order to OFDM-demodulate the respective characteristic data.

The speaker resource extracting unit 236 converts the respective characteristic data, received from the OFDM demodulating unit 238, into the respective characteristic data symbols and transfers the respective characteristic data symbols to the respective demodulating units 235_1 ∼ 235-M.

Each of the demodulating units 235_1 ∼ 235_M includes an equalizing unit 233, a channel estimating unit 234, a constellation demodulating unit 232, and a decoding unit 231. The respective demodulating units 235_1 ∼ 235_M perform constellation demodulating and decoding operations on the respective characteristic data symbols received from the speaker resource extracting unit 236, and transfer the results to the controller 240.

Herein, it is preferable that the demodulating units 235_1 ∼ 235_M are as many as the wireless audio speakers 400.

The equalizing unit 233 compensates each characteristic data symbol for a distortion caused by interference and noise during transmission.

The channel estimating unit 234 determines a filter coefficient of the equalizing unit 233 in order to compensate each characteristic data symbol for a distortion.

The constellation demodulating unit 232 performs a constellation demodulating operation on each characteristic data symbol compensated by the equalizing unit 233.

The decoding unit 231 decodes the output of the constellation demodulating unit 232 and transfers the result to the controller 240.

Hereinafter, a description will be given of the controller 240, the multichannel distributor 210 and the transmitter 220 of the transmitting module 300.

The controller 240 generates control data for control of the respective wireless audio speakers 400 on the basis of the respective characteristic data received from the receiver 230, and allocates the respective different subcarriers to the respective wireless audio speakers 400 on the basis of the respective wireless channel conditions contained in the respective characteristic data.

The multichannel distributor 210 performs a signal processing operation on the sound source on the basis of sound source data and the respective characteristic data of the respective wireless audio speakers 400 received from the controller 240, to generate the respective audio streams for the respective wireless audio speakers 400. A detailed structure of the multichannel distributor 210 will be described later with reference to FIG. 3.

Herein, the sound source input to the multichannel distributor 210 may be provided from storage media (e.g., magnetic tapes, CDs, DVDs, and memories) and/or sound source generating media (e.g., audio recorders).

The transmitter 220 encodes and maps the respective audio streams received from the multichannel distributor 210 and the control data received from the controller 240, to generate multichannel audio data.

Then, the transmitter 220 transmits the multichannel audio data to the respective wireless audio speakers 400, on the respective subcarriers, in an OFDM modulation scheme, in a batch fashion.

The transmitter 220 includes a plurality of encoding units 221, a plurality of constellation mapping units 222, a speaker resource mapping unit 223, and an OFDM modulating unit 224.

The respective encoding units 221 perform a Forward Error Correction (FEC) encoding operation on the respective audio streams of the respective wireless audio speakers 400 received from the multichannel distributor 210.

The respective constellation mapping units 222 perform a constellation mapping operation on the respective encoded audio streams to generate the respective audio symbols of the respective wireless audio speakers 400.

The speaker resource mapping unit 223 adds a preamble and a pilot symbol to the respective audio symbols to generate the multichannel audio data.

The OFDM modulating unit 224 performs an OFDM modulating operation on the multichannel audio data by using the respective subcarriers allocated to the respective wireless audio speakers 400.

In addition, the wireless audio transmitting apparatus 200 further includes a transmission front end 250, a reception front end 260, and a duplexer 270.

The transmission front end 250 transmits the OFDM-modulated multichannel audio data to the respective wireless audio speakers 400, by frequency shifting, on a carrier, through the duplexer 270 and an antenna.

The reception front end 260 performs a frequency shifting operation on the carrier received through the antenna and the duplexer 270 to extract the respective characteristic data.

The wireless audio transmitting apparatus 200 uses a time division scheme that performs a transmitting operation of the transmitter 220 and a receiving operation of the receiver 230 at different times, or uses a frequency division scheme that performs a transmitting operation of the transmitter 220 and a receiving operation of the receiver 230 by carriers of different frequency bands. Thus, the duplexer 270 serves somewhat differently between the time division scheme and the frequency division scheme.

In the time division scheme, the duplexer 270 serves as a switching device that connects the antenna to the transmitter 220 or the receiver 230. For example, the duplexer 270 connects the antenna to the transmitter 220 during a time T1 in order to transmit the multichannel audio data to the wireless audio speakers 400; and connects the antenna to the receiver 230 during a time T2 in order to receive the respective characteristic data from the respective wireless audio speakers 400.

In the frequency division scheme, the duplexer 270 serves as a device for dividing transmission/reception frequencies. For example, the duplexer 270 transfers the OFDM-modulated multichannel audio data, received from the transmitter 220, to the antenna in a frequency band F1 in order to transmit the OFDM-modulated multichannel audio data to the wireless audio speakers 400; and transfers the respective characteristic data, received through the antenna from the respective wireless audio speakers 400, to the receiver 230 in a frequency band F2.

FIG. 3 is a block diagram of the multichannel distributor 210 of the wireless audio transmitting apparatus 200 according to an exemplary embodiment.

Referring to FIG. 3, it is illustrated that a multimedia sound source, in which the number of audio channels is V and the number of quantization bits is Q, is input to the multichannel distributor 210.

The multichannel distributor 210 distributes V-channel audio data into optimized M-channel sound sources for the respective wireless audio speakers 400 on the basis of the wireless channel conditions with the respective audio speakers 400, the number of the wireless audio speakers 400 transmitting the characteristic data, and the distances between the respective wireless audio speakers 400 and the audience.

Herein, the multichannel distributor 210 may determine the number of quantization bits on the basis of the wireless channel conditions and the channel capacities of the respective wireless audio speakers 400, and may control the level of an output sound according to the distance data.

As illustrated in FIG. 3, the multichannel distributor 210 receives serial multichannel multimedia sound sources, performs a parallel signal processing operation to generate the respective audio streams for the respective wireless audio speakers 400, and outputs the respective audio streams in parallel. Thus, the multichannel distributor 210 is advantageous in transmission timing control, buffer utilization, and synchronization acquisition.

FIG. 4 is a block diagram of the wireless audio speaker 400 according to an exemplary embodiment.

Referring to FIG. 4, the wireless audio speaker 400 according to an exemplary embodiment includes a receiver 420, a demultiplexer 480, a speaker 440, a controller 430, and a transmitter 410.

The receiver 420 OFDM-demodulates and decodes only audio data carried on the allocated subcarrier (among the multichannel audio data transmitted from the wireless audio transmitting apparatus 200 on the respective subcarriers in an OFDM demodulation scheme) into an audio stream.

The receiver 420 includes an OFDM demodulating unit 425, a synchronizing unit 426, an equalizing unit 423, a channel estimating unit 424, a constellation demodulating unit 422, and a decoding unit 421.

The OFDM demodulating unit 425 OFDM-demodulates only the audio data carried on the allocated subcarrier, among the OFDM-modulated multichannel audio data received from the wireless audio transmitting apparatus 200.

The synchronizing unit 426 detects the synchronization of the output of the OFDM demodulating unit 425 in order to acquire the synchronization of the audio stream.

The equalizing unit 423 receives the output of the OFDM demodulating unit 425 and compensates for a distortion caused by interference and noise during transmission.

The channel estimating unit 424 receives the output of the OFDM demodulating unit 425 and determines a filter coefficient of the equalizing unit 423 to increase the efficiency of the equalizing unit 423.

The constellation demodulating unit 422 receives the output of the equalizing unit 423 and performs a Quadrature Amplitude Modulation (QAM) operation on the same.

The decoding unit 421 receives the output of the constellation demodulating unit 422 and performs an FEC decoding operation on the same to convert into audio data.

The demultiplexer 480 divides the audio data into an audio stream and control data used for control of the speaker 440.

The speaker 440 is a device that converts an electrical signal into a vibration of a vibrating plate to generate a longitudinal wave in the air to reproduce a sound wave. The speaker 440 reproduces the audio stream divided by the demultiplexer 480 into a sound.

The controller 430 controls the operation states of the speaker 440, such as a reproduction condition and a reproduction volume level, on the basis of the control data received from the demultiplexer 480.

The controller 430 generates the characteristic data for the signal process and the resource allocation for each wireless audio speaker 400.

Meanwhile, a sound compensating unit 490 is further provided between the demultiplexer 480 and the speaker 440, so that the reproduction volume level of the audio stream can be controlled on the basis of the distance between the wireless audio speaker 400 and the audience and the distance between the wireless audio transmitting apparatus 200 and the wireless audio speaker 400.

The transmitter 410 performs encoding and constellation mapping operation on the characteristic data received from the controller 430 to generate characteristic data, and OFDM-modulates the generated characteristic data, and outputs the results in a batch fashion.

The transmitter 410 includes an encoding unit 411, a constellation mapping unit 412, a resource mapping unit 413, and an OFDM demodulating unit 414.

The encoding unit 411 performs an FEC encoding operation on the characteristic data output from the controller 430.

The constellation mapping unit 412 performs a constellation mapping operation on the encoded characteristic data output from the encoder 411 to generate a characteristic data symbol.

The resource mapping unit 413 adds a preamble and a pilot symbol to the characteristic data symbol output from the constellation mapping unit 412 to generate characteristic data.

The OFDM modulating unit 414 performs an OFDM modulating operation on the characteristic data of each wireless audio speaker 400 output from the resource mapping unit 413 by using the allocated subcarrier.

In addition, the wireless audio speaker 400 further includes a transmission front end 450, a reception front end 460, and a duplexer 470.

The transmission front end 450 transmits the OFDM-modulated characteristic data output from the OFDM modulating unit 414 to the wireless audio transmitting apparatus 200, on a carrier, through the duplexer 470 and an antenna.

The reception front end 460 extracts multichannel audio data, which is OFDM-modulated by subcarriers, from the carrier received from the antenna.

The duplexer 470 of the wireless audio speaker 400 uses a time division scheme that performs transmission and reception at different times, or uses a frequency division scheme that performs transmission and reception by carriers of different frequency bands. Thus, the duplexer 470 serves somewhat differently between the time division scheme and the frequency division scheme.

In the time division scheme, the duplexer 470 serves as a switching device that connects the antenna to the transmitter 410 or the receiver 420. For example, the duplexer 470 connects the antenna to the transmitter 410 during a time T1 in order to transmit the OFDM-modulated characteristic data output from the transmitter 410 to the wireless audio transmitting apparatus 200; and connects the antenna to the receiver 420 during a time T2 in order to transfer the OFDM-modulated multichannel audio data received from the wireless audio transmitting apparatus 200 to the receiver 420.

In the frequency division scheme, the duplexer 470 serves as a device for dividing transmission/reception frequencies. For example, the duplexer 470 transmits the OFDM-modulated characteristic data output from the transmitter 410 to the wireless audio transmitting apparatus 200 in a frequency band F1; and receives the multichannel audio data from the wireless audio transmitting apparatus 200 through the antenna in a frequency band F2.

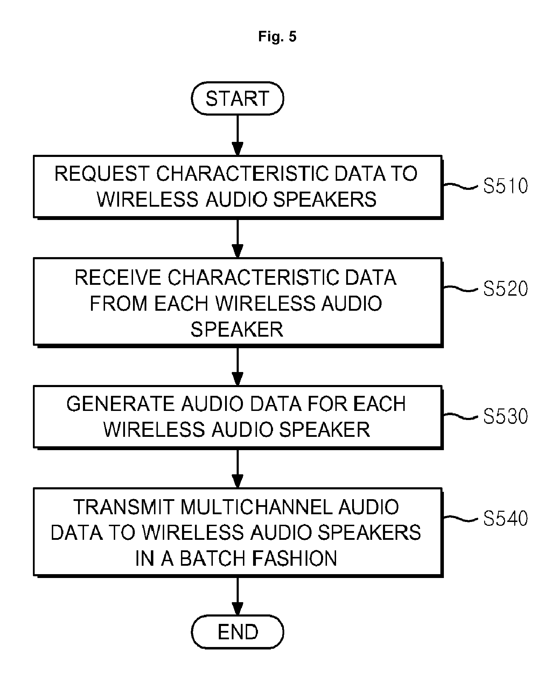

FIG. 5 is a flow diagram illustrating a method for controlling the wireless audio transmitting system according to an exemplary embodiment. Hereinafter, a description will be made with reference to FIG. 5.

Referring to FIG. 5, the wireless audio transmitting system transmits multichannel audio data to a plurality of wireless audio speakers in an Orthogonal Frequency Division Multiple Access (OFDMA) scheme.

In step S510, the wireless audio transmitting apparatus 200 requests the respective characteristic data to the respective wireless audio speakers 400 in a batch fashion.

Herein, the wireless audio transmitting apparatus 200 performs an auto-initialization (booting) process and then transmits a wake-up signal, a training signal, allocation data of a subcarrier, and synchronization data and requests the respective characteristic data to the respective wireless audio speakers 400.

Herein, the wireless audio transmitting apparatus 200 obtains the respective characteristic data from the respective wireless audio speakers 400 responding to the request during a predetermined time. It is preferable that this process (S510) continues until the respective characteristic data are obtained from a predetermined number (e.g., 5) or more of the respective wireless audio speakers 400.

In step S520, the wireless audio transmitting apparatus 200 receives the respective characteristic data from the respective wireless audio speakers 400, which have received the request, among the wireless audio speakers 400.

Herein, the characteristic data may be at least one of an identifier of the wireless audio speaker 400 and a wireless channel condition between the wireless audio speaker 400 and the wireless audio transmitting apparatus 200.

Herein, the wireless audio speaker 400 receives the wake-up signal transmitted simultaneously with the request for the characteristic data to wake up from a sleep mode, and then transmits an identifier, additional data, initial ranging, a training signal for synchronization, and a wireless channel condition on an allocated subcarrier.

In step 530, the wireless audio transmitting apparatus 200 allocates the respective different subcarriers to the respective audio speakers 400 on the basis of the OFDM-modulated characteristic data received from the respective wireless audio speakers, and generates multichannel audio data for the respective wireless audio speakers 400.

Specifically, the wireless audio transmitting apparatus 200 detects the wireless channel condition with each wireless audio speaker 400 on the basis of each characteristic data, allocates each subcarrier to each wireless audio speaker 400 on the basis of each wireless channel condition, and performs a signal processing operation on a sound source to generate multichannel audio data.

Herein, the wireless audio transmitting apparatus 200 performs a signal processing operation on the sound source on the basis of the number of the wireless audio speakers 400 transmitting the characteristic data, the wireless channel conditions, and the distances between the audience and the respective wireless audio speakers 400.

In step 540, the wireless audio transmitting apparatus 200 transmits the multichannel audio data of the respective wireless audio speakers 400, in a batch fashion, on subcarriers and a carrier allocated to the respective wireless audio speakers.

Specifically, the wireless audio transmitting apparatus 200 OFDM-modulates the multichannel data on the respective subcarriers allocated to the respective wireless audio speakers, carries the OFDM-modulated multichannel audio data for the respective wireless audio speakers 400 on a carrier by frequency shifting, and transmits the results to the respective wireless audio speakers 400 in a batch fashion.

Herein, the wireless audio transmitting apparatus 200 adds a channel estimation, a training signal for channel synchronization, a control channel, and audio data to the carrier to be transmitted.

Thereafter, each wireless audio speaker 400 receives the carrier from the wireless audio transmitting apparatus 200, and receives and reproduces only the multichannel audio data carried on its own subcarrier allocated.

Meanwhile, the wireless audio transmitting apparatus 200 may request the characteristic data to each wireless audio speaker 400 on demand, and may reallocate a subcarrier to each wireless audio speaker 400 adaptively according to the wireless channel condition on the basis of each characteristic data transmitted in response to the request.

As described above, the present invention is advantageous in synchronization of the wireless audio speakers because it simultaneously transmits audio signals for the wireless audio speakers in an OFDMA scheme. Also, the present invention can increase the audio service quality because it allocates resources adaptively by monitoring the wireless channel environments of the wireless audio speakers.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A wireless audio transmitting apparatus comprising:
a receiver receiving a plurality of characteristic data from a plurality of wireless audio speakers; and
a transmitting module allocating respectively different subcarriers to the respective wireless audio speakers on the basis of the respective characteristic data and transmitting audio data for the respective wireless audio speakers, on the subcarriers, in an Orthogonal Frequency Division Multiplexing (OFDM) modulation scheme, in a batch fashion.

2. The wireless audio transmitting apparatus of claim 1, wherein the receiver OFDM-demodulates signals received from the wireless audio speakers to extract the respective characteristic data, classifies the respective characteristic data for the respective wireless audio speakers, and provides the classified respective characteristic data to the transmitting module.

3. The wireless audio transmitting apparatus of claim 1, wherein the transmitting module performs a signal processing operation on a sound source on the basis of the respective characteristic data and a data for the sound source to generate the respective audio data.

4. The wireless audio transmitting apparatus of claim 1, wherein the transmitting module comprises:
a controller generating respective control data for the respective wireless audio speakers on the basis of the respective characteristic data and allocating the respectively different subcarriers to the respective wireless audio speakers;
a multichannel distributor performing a signal processing operation on a sound source on the basis of the respective characteristic data and generating respective audio streams for the respective wireless audio speakers;
a speaker resource mapping unit decoding and mapping the respective audio streams and the respective control data to generate multichannel audio data; and
an OFDM modulating unit transmitting the multichannel audio data, on the respective subcarriers, in an OFDM modulating scheme, in a batch fashion.

5. The wireless audio transmitting apparatus of claim 4, wherein the multichannel distributor generates the respective audio streams on the basis of at least one of the number of the respective wireless audio speakers, the wireless channel conditions between the wireless audio transmitting apparatus and the respective wireless audio speakers, and the distances between an audience and the respective wireless audio speakers.

6. The wireless audio transmitting apparatus of claim 4, wherein the controller allocates the respective different subcarriers on the basis of the wireless channel conditions between the wireless audio transmitting apparatus and the respective wireless audio speakers contained in the respective characteristic data.

7. The wireless audio transmitting apparatus of claim 1, wherein the receiver and the transmitting module perform reception and batch transmission respectively at different times.

8. The wireless audio transmitting apparatus of claim 1, wherein the receiver and the transmitting module perform reception and batch transmission respectively by using carriers of different frequencies.

9. A wireless audio speaker comprising:
a receiver Orthogonal Frequency Division Multiplexing (OFDM)-demodulating and decoding only audio data carried on an allocated subcarrier, among multichannel audio data transmitted from a wireless audio transmitting apparatus on a plurality of subcarriers in an OFDM scheme;
a demultiplexer dividing the audio data into an audio stream and control data;
a speaker reproducing the audio stream; and
a controller controlling the operation state of the speaker according to the control data.

10. The wireless audio speaker of claim 9, further comprising a transmitter transmitting characteristic data containing at least one of an identifier of the wireless audio speaker and a wireless channel condition between the wireless audio speaker and the wireless audio transmitting apparatus.

11. The wireless audio speaker of claim 10, wherein the transmitter and the receiver perform transmission and reception respectively at different times.

12. The wireless audio speaker of claim 10, wherein the transmitter and the receiver perform transmission and reception by using carriers of different frequencies.

13. A wireless audio transmitting system comprising:
one or more wireless audio speakers; and
a wireless audio transmitting apparatus receiving respective characteristic data from the respective wireless audio speakers, generating respective audio streams for the respective wireless audio speakers on the basis of the respective characteristic data, and transmitting the respective audio streams, on respective subcarriers allocated to the respective wireless audio speakers according to the respective characteristic data, in an Orthogonal Frequency Division Multiplexing (OFDM) modulation scheme, in a batch fashion.

14. The wireless audio transmitting system of claim 13, wherein the characteristic data contains at least one of an identifier of the wireless audio speaker and a wireless channel condition between the wireless audio speaker and the wireless audio transmitting apparatus.

15. The wireless audio transmitting system of claim 14, wherein the wireless audio transmitting apparatus identifies the wireless audio speaker transmitting the characteristic data, among the wireless audio speakers, on the basis of the identifier.

16. The wireless audio transmitting system of claim 13, wherein the wireless audio transmitting apparatus reallocates the subcarriers on the basis of the respective characteristic data received.

17. A method for controlling a wireless audio transmitting system transmitting multichannel audio data to a plurality of wireless audio speakers, the method comprising:
receiving respective characteristic data from the respective wireless audio speakers;
allocating respective different subcarriers to the respective wireless audio speakers on the basis of the respective characteristic data and generating respective audio data for the respective wireless audio speakers; and
transmitting multichannel audio data for the respective wireless audio speakers on the allocated respective subcarriers in a batch fashion.

18. The method of claim 17, further comprising:
requesting the respective characteristic data to the respective wireless audio speakers; and
reallocating subcarriers to the respective wireless audio speakers in response to the request on the basis of the respective characteristic data received from the respective wireless audio speakers.

19. The method of claim 17, wherein the requesting of the respective characteristic data comprises transmitting a wake-up signal, a training signal, subcarrier allocation information, and synchronization data.

20. The method of claim 17, wherein the allocating of subcarriers and generating of respective audio data comprises:
detecting respective wireless channel conditions with the respective wireless audio speakers from the respective characteristic data and reallocating subcarriers for the respective wireless audio speakers on the basis of the respective wireless channel conditions; and
performing a signal processing operation on a sound source on the basis of the respective characteristic data and generating the multichannel audio data.

21. The method of claim 20, wherein the signal processing operation on the sound source is performed on the basis of the number of the wireless audio speakers, the respective wireless channel conditions with the respective wireless audio speakers, and the distances between an audience and the respective wireless audio speakers.

22. The method of claim 17, wherein the transmitting of the multichannel audio data in a batch fashion comprises:
Orthogonal Frequency Division Multiplexing (OFDM)-modulating the multichannel audio data on the allocated subcarriers;
carrying the OFDM-modulated multichannel audio data on a carrier by frequency shifting; and
transmitting the carrier to the respective wireless audio speakers in a batch fashion.

23. The method of one of claims 17 to 22, wherein the characteristic data contains at least one of an identifier of the wireless audio speaker and a wireless channel condition between the wireless audio speaker and the wireless audio transmitting apparatus.

24. A wireless audio transmitting apparatus comprising:
a receiver receiving a plurality of characteristic data from a plurality of wireless audio speakers; and
a transmitting module establishing respective links for the respective wireless audio speakers on the basis of the respective characteristic data, generating respective audio data for the respective wireless audio speakers on the basis of a sound source and the respective characteristic data, synthesizing the respective audio data, and transmitting the synthesized audio data through the respective links.

25. The wireless audio transmitting apparatus of claim 24, wherein the respective links use different frequency bands.
